# FASCICULE DE BREVET EUROPEEN

(11) **EP 3 682 140 B1**
(45) Date de publication et mention de la délivrance du brevet: **26.10.2022**
(21) Numéro de dépôt: 18782116.0
(22) Date de dépôt: 12.09.2018
(51) Int. Cl.: F16H 1/28

(54) **PIVOT POUR PALIER LISSE ET TRAIN D'ENGRENAGES**
DREHPUNKT FÜR GLEITLAGER UND ZAHNRADGETRIEBE
PIVOT FOR SLIDING BEARING AND GEAR TRAIN

(30) Priorité: 12.09.2017 FR 1758421
(43) Date de publication de la demande: 22.07.2020
(73) Titulaire: Safran Transmission Systems, 92700 Colombes (FR)
(72) Inventeur: LEMOINE, Julie, Marie, Renée, 77550 Moissy-Cramayel (FR); DOMBEK, Alexis, Claude, Michel, 77550 Moissy-Cramayel (FR); PAP, Balint, 77550 MOISSY-CRAMAYEL (FR)
(74) Mandataire: Ernest Gutmann - Yves Plasseraud S.A.S.
(86) Numéro de dépôt international: PCT/FR2018/052236
(87) Numéro de publication internationale: WO 2019/053373

(56) Documents cités:
- EP-A1- 2 607 695
- FR-A1- 2 991 421
- US-A1- 2012 309 582

## Description

La présente invention concerne un pivot à palier lisse et un train d'engrenages, notamment pour une turbomachine à gaz pour aéronef, équipé d'au moins un tel pivot.

Un train épicycloïdal est notamment visé, qui comprend une couronne extérieure et des pignons satellites en prise avec un pignon central et avec la couronne extérieure et montés chacun libre en rotation sur un porte-satellites, les pignons satellites pouvant chacun tourner autour d'un axe de satellite par l'intermédiaire d'un pivot.

Sont notamment concernés :
- les trains d'engrenages épicycloïdaux dans lesquels la couronne extérieure est mobile en rotation (montage également appelé train réducteur épicycloïdal),
- mais aussi, ceux dans lequel le porte-satellites est fixe et la couronne extérieure est mobile (montage également appelé train réducteur planétaire).

Le porte-satellite peut donc être fixe ou pivotant autour de l'axe du planétaire interne et du planétaire externe.

L'entrée peut être formée par le planétaire interne, et la sortie par le porte-satellite.

Dans une turbomachine, des trains épicycloïdaux sont ainsi notamment utilisés pour réduire la vitesse de rotation du rotor de la soufflante, indépendamment de la vitesse de rotation de la turbine.

Le document FR 2 991 421 décrit un tel train épicycloïdal, dans lequel les roues dentées formant les satellites sont montées sur des pivots du porte-satellite par l'intermédiaire de paliers lisses, ce qui est favorable en termes d'encombrement et de poids. Les paliers lisses ont une durée de vie quasiment infinie, pour autant qu'ils soient constamment alimentés avec une huile ne comportant pas de particules abrasives.

US 20120309582 divulgue par ailleurs un pivot pour palier lisse de train d'engrenages, le pivot présentant une partie formant un fût central, s'étendant autour d'un passage axial du pivot, et des rainures circonférentielles axialement opposées, ouvertes axialement (donc latéralement, en procurant une souplesse au pivot) qui séparent radialement, de deux parties latérales en porte-à-faux du pivot, deux parties extrêmes latérales axialement opposées du fût central, chaque rainure circonférentielle présentant une extrémité latérale libre et :
- radialement, au moins une largeur,
- ainsi qu'au moins une profondeur, dans une direction suivant laquelle la rainure circonférentielle s'étend vers l'intérieur du pivot, depuis l'extrémité latérale libre jusqu'à une extrémité de fond de cette rainure.

Quoi qu'il en soit, la sensibilité à la lubrification implique un contrôle de la déformée du palier côté pivot et de sa température en fonctionnement.

Or, lors de calculs TEHD (thermo-élasto-hydro-dynamique) sur un pivot pour palier lisse conventionnel, il a été observé un échauffement de la surface active du pivot (surface radialement extérieure formant une partie du palier une fois le pivot monté entre le satellite et le porte-satellite), notamment dans une zone située circonférentiellement juste en amont du passage, tel qu'une fente, d'alimentation en huile ménagé dans ladite surface active de ce pivot.

Il a été également observé des désalignements non identiques entre les portées amont et les portées aval de différents pivots. Des déplacements tangentiels, dus aux couples appliqués, et/ou radiaux, dus à la force centrifuge, et non symétriques entre l'amont (AM ci-après) et l'aval (AV ci-après) le long de l'axe de rotation (X ci-après), ont été constatés sur des pivots.

Tout ceci est dommageable car susceptible d'affecter la fiabilité du pivot et l'efficacité du palier.

L'invention a notamment pour but d'apporter une solution simple, efficace et économique à une partie au moins de ces problèmes.

A cet effet, elle propose un pivot pour palier lisse de train d'engrenages selon la revendication 1.

La circonférence dont il s'agit est celle de la surface extérieure du pivot destinée à former une partie du palier lisse.

Les ouvertures latérales des rainures circonférentielles axialement opposées dont il fait état en revendication 1 procurent une souplesse au pivot.

Des essais et mesures ont confirmé qu'on pouvait même supprimer localement la souplesse accordée par les zones précitées de souplesse.

En faisant ainsi varier, angulairement, la largeur ou la profondeur de l'une au moins des zones de souplesse formées par les parties latérales en porte-à-faux, on va modifier la répartition de la matière dans le pivot par rapport à un pivot à rainures circonférentielles uniformément identiques radialement et dans le sens de leurs profondeurs, étant rappelé que ces rainures circonférentielles permettent de diminuer la rigidité du pivot afin de limiter le désalignement entre la surface active du pivot et ses portées. Or il s'est avéré que le besoin de souplesse n'est pas nécessaire dans toutes les directions. Il est donc possible de diminuer cette largeur et/ou profondeur en zone(s) de souplesse dans les endroits à fort échauffement, afin d'augmenter la conduction et ainsi diminuer la température de la zone active, sans pour autant altérer la qualité de l'alignement précité. Il a en effet été constaté qu'une cause de l'augmentation locale précitée de la température était liée à une présence d'air emprisonné en zone de souplesse. La solution proposée remédie à cela. L'absence de matière limite la conduction de la chaleur et donc l'évacuation des calories.

D'autres essais et mesures ont confirmé qu'une(des) dite(s) largeur(s) et/ou profondeur(s) réduite(s), pouvant être nulle(s), s'étendant sur un secteur angulaire compris circonférentiellement entre 45° et 110° assurai(en)t un compromis favorable entre portée guidée et bonne évacuation des calories.

Avec des effets comparables, une approche alternative ou complémentaire à celle qui précède s'est aussi avérée possible, si elle est prévue seule, ou si lesdites deux parties latérales en porte-à-faux présentent l'une la solution ci-avant, l'autre la solution qui suit : à savoir que l'une au moins des rainures circonférentielles (donc des deux parties latérales en porte-à-faux) soit annulaire, en présentant alors, bien sûr :
- une profondeur qui varie circonférentiellement, si la profondeur de l'autre est conventionnelle,
- ou une largeur qui elle-même varie circonférentiellement.

Afin de favoriser notamment encore davantage les transferts thermiques et l'efficacité dans l'effet anti-désalignement, il est par ailleurs conseillé que le pivot précité soit monobloc, avec ses parties latérales en porte-à-faux et son fût central en une seule pièce.

Concernant maintenant le train d'engrenages pour turbomachine à gaz d'aéronef, auquel se rapporte aussi l'invention, il prévu qu'il comprenne une couronne extérieure et des pignons satellites, en prise avec le pignon central et avec la couronne extérieure et montés chacun libre en rotation sur un porte-satellites les pignons satellites pouvant chacun tourner autour d'un axe de satellite (X ci-après) par l'intermédiaire d'un pivot précité, avec tout ou partie de ses caractéristiques.

Il est aussi prévu que ce train d'engrenages puisse comporter en outre des moyens d'amenée d'huile au niveau d'une interface entre un dit pignon satellite et le pivot considéré. Au moins un dit pivot présentera alors de préférence une surface circonférentielle radialement extérieure qui présentera au moins un passage d'alimentation en un liquide lubrifiant, ladite largeur (l ci-après) et/ou profondeur (P ci-après) étant minimum dans une zone latérale du pivot adjacente à ce(s) passage(s) et située angulairement du côté opposé à celui vers lequel le lubrifiant coule (sens S ci-après) sur la surface extérieure quand le train d'engrenages peut tourner, donc que ses engrenages sont opérationnels.

Un tel train d'engrenages est performant en ce qu'il associe une performance dans l'alignement attendu des pièces concernées et une limitation des points chauds néfastes tant mécaniquement pour la structure des pièces que pour le lubrifiant.

Quant à la turbomachine précitée, concernée aussi en tant que telle, elle pourra comprendre un tel train d'engrenages dont le pignon central pourra entourer et être solidaire en rotation d'un arbre du compresseur de la turbomachine.

Et en particulier, il pourra s'agir d'un cas dans lequel la couronne extérieure sera solidaire d'un carter ou d'une virole annulaire statique du compresseur basse pression.

En alternative, le porte-satellites sera solidaire d'un carter.

Si, dans le cadre d'un train d'engrenages épicycloïdal auquel l'invention est donc en particulier applicable, la couronne extérieure est fixe, le train d'engrenages pourra être qualifié de réducteur puisque la vitesse de sortie, c'est-à-dire celle du porte-satellites est plus faible que la vitesse d'entrée, c'est-à-dire celle de l'arbre d'entrainement en rotation du pignon central.

Le porte-satellites peut par exemple être alors relié à une roue de soufflante amont (AM) de la turbomachine dont la vitesse est ainsi inférieure à la vitesse de l'arbre du compresseur.

Autre aspect encore sur lequel l'invention est intervenue : le procédé de réalisation d'un pivot à palier lisse.

En effet, il n'a à la connaissance des inventeurs jusqu'à présent jamais été défini de méthode permettant d'obtenir une bonne évacuation de calories, voire un compromis favorable entre cette évacuation et une portée toujours efficacement guidée.

C'est ainsi qu'il est ici proposé un procédé pour réaliser le pivot ci-avant évoqué, là encore avec tout ou partie de ses caractéristiques, où :
- sur un premier pivot (dit réfèrent) constitué comme précité, sauf en ce qu'il présente une dite largeur et/ou une dite profondeur qui ne varie pas circonférentiellement, on détermine par un modèle TEHD des champs de température du pivot au moins à l'endroit de l'une au moins des parties latérales en porte-à-faux,
- on identifie à cet endroit au moins une zone que le modèle TEHD indique comme la zone de la ou des températures les plus élevées, puis
- sur un second pivot comme précité, on positionne angulairement, autour de son axe (X1) et en correspondance de la zone de la ou des températures les plus élevées, l'endroit où ladite largeur et/ou ladite profondeur est(sont) minimum.

Cette manière d'opérer est rapide, simple et fiable.

Il est précisé que la méthode thermo-hydrodynamique dans le cadre de la lubrification, notée THD, consiste à déterminer les champs de température dans le fluide lubrifiant mais aussi dans les solides constituant le contact en liaison avec le champ de pression hydrodynamique dans le film qui lubrifie. Pour cela, à l'équation de Reynolds dont le paramètre principal est la pression sont associées deux équations supplémentaires : l'équation de l'énergie qui va permettre de déterminer la température en tout point du fluide, et l'équation de Fourrier qui permettra de déterminer la température dans les solides (arbre, bielle, coussinet, etc.). Le modèle est dit thermo-élastohydrodynamique, noté TEHD, lorsque les déformations élastiques et thermo-élastiques sont prises en compte en plus des phénomènes purement thermiques dans la résolution globale du problème. Il va de soi que les déformations thermiques des solides ne peuvent être prises en compte que si l'on connaît les températures dans les solides.

L'invention sera si nécessaire encore mieux comprise et d'autres détails, caractéristiques et avantages de l'invention pourront apparaître à la lecture de la description suivante faite à titre d'exemple non limitatif en référence aux dessins annexés dans lesquels :
- la figure 1 est un schéma de face d'un train d'engrenages,
- la figure 2 est un schéma cinématique d'un train épicycloïdal,
- la figure 3 est une vue en coupe locale du palier lisse,
- la figure 4 est un schéma longitudinal d'une turbomachine,
- la figure 5 est une perspective d'un pivot de l'art antérieur,
- les figures 6,7 sont deux modes possibles de réalisation d'un pivot selon l'invention,
- la figure 8 est un détail agrandi de la figure 7,
- la figure 9 est une coupe axiale selon IX-IX de la figure 7,
- la figure 10 est un schéma de montage de pivots dans une configuration épicycloïdale,
- la figure 11, est un schéma de montage de pivots dans une configuration planétaire et,
- sur la figure 12 sont comparées deux solutions d'engrenages en haut épicycloïdale, en bas à planétaire.

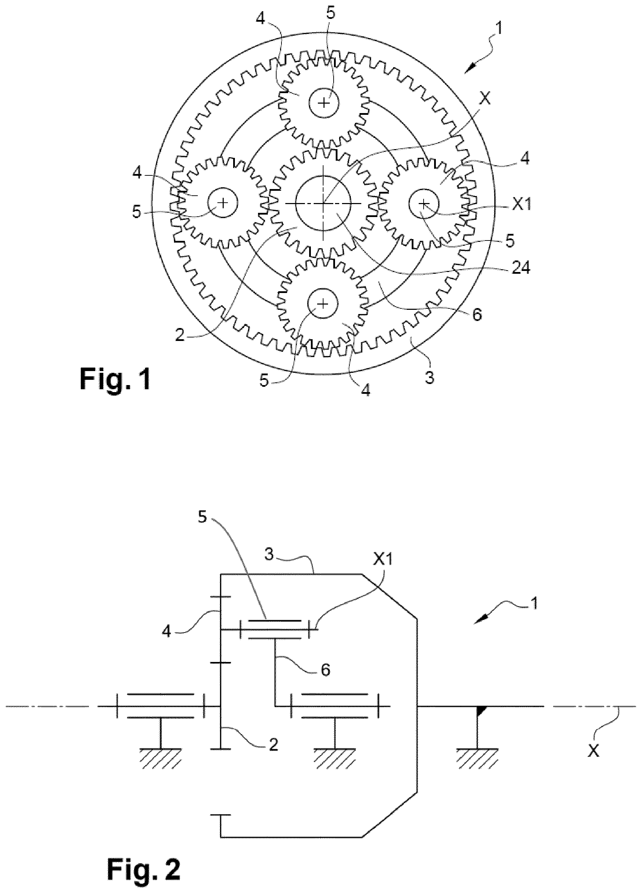

Les figures 1 et 2 illustrent schématiquement la structure d'un train d'engrenages 1 sur laquelle l'invention peut s'appliquer. Le train d'engrenages 1 comporte classiquement un planétaire interne 2 (également appelé soleil ou solaire) et un planétaire externe 3 (également appelé couronne extérieure), les deux planétaires étant coaxiaux. Le planétaire interne, ou pignon central 2 peut être mobile en rotation autour de son axe X, le planétaire externe, ou couronne extérieure 3 pouvant être fixe, ou l'inverse. Le train d'engrenages 1 comporte en outre des satellites, ou pignons satellites 4 montés de façon mobile en rotation sur des pivots 5 d'un porte-satellites 6. Chaque satellite 4 engrène à la fois avec le planétaire interne 2 et avec le planétaire externe 3. Le porte-satellites 6 est fixe ou pivotant autour de l'axe X du planétaire interne 2 et du planétaire externe 3. L'entrée peut être formée par le planétaire interne 2 et la sortie formée par le porte-satellites 6.

Le porte-satellites 6 peut être couplé en rotation à une hélice (dans le cas d'un turbopropulseur) ou à une roue de soufflante (dans le cas d'un turboréacteur).

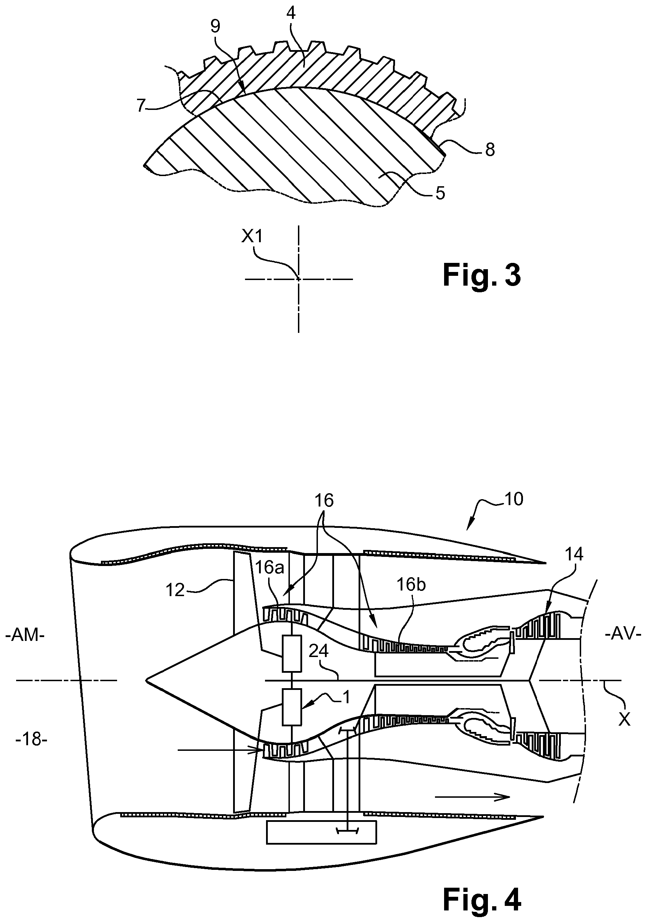

Dans une turbomachine 10 à gaz pour aéronef, des trains épicycloïdaux, individuellement repérés 1, sont notamment utilisés en tant que réducteur de vitesse pour réduire la vitesse de rotation d'un rotor, tel qu'une soufflante 12 figure 4, indépendamment de la vitesse de rotation d'au moins une turbine 14 couplée axialement en aval à au moins un compresseur 16 dont la turbomachine est aussi équipée. A partir de l'entrée d'air 18 frontale, la soufflante 12, puis notamment le compresseur 16 reçoivent de l'air.

Le pignon central, ou planétaire interne, 2 entoure et est alors solidaire en rotation de l'arbre 24 du compresseur 16 ; voir exemple figures 1,4. Le train d'engrenages 1 peut en particulier être monté dans une enceinte annulaire formée radialement à l'intérieur d'un compresseur basse pression 16a agencé en aval de la roue de soufflante 12 et en amont (AM) d'un compresseur haute pression 16b.

Comme cela est visible en considérant les figures 1-3, chaque satellite 4 comporte une surface interne cylindrique 7 montée pivotante autour d'une surface cylindrique 8 (surface extérieure de portée) du pivot 5 correspondant du porte-satellites 6, de façon à former un palier lisse.

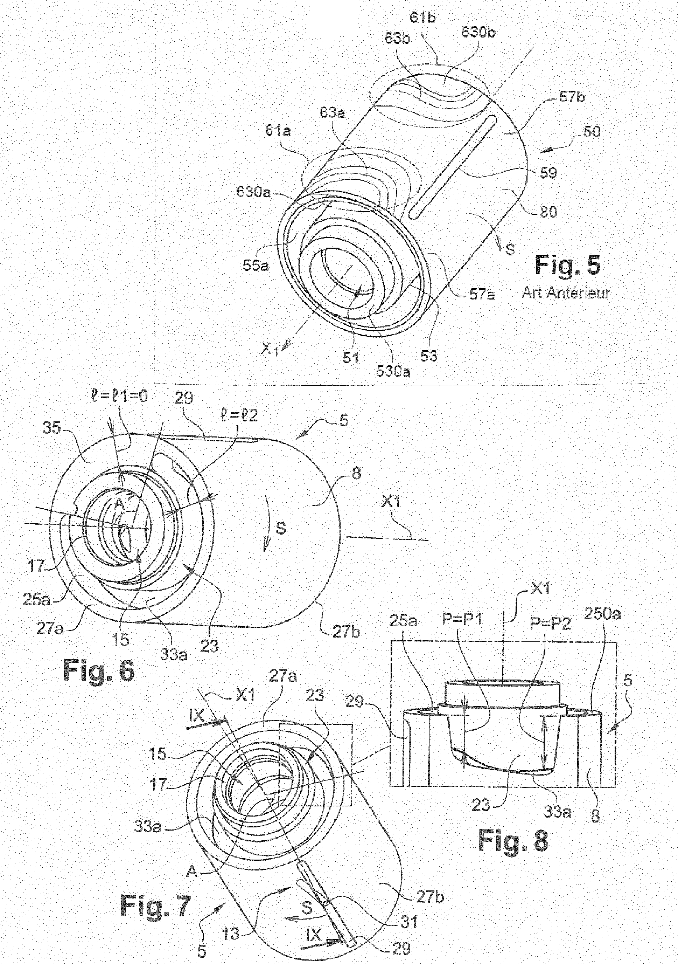

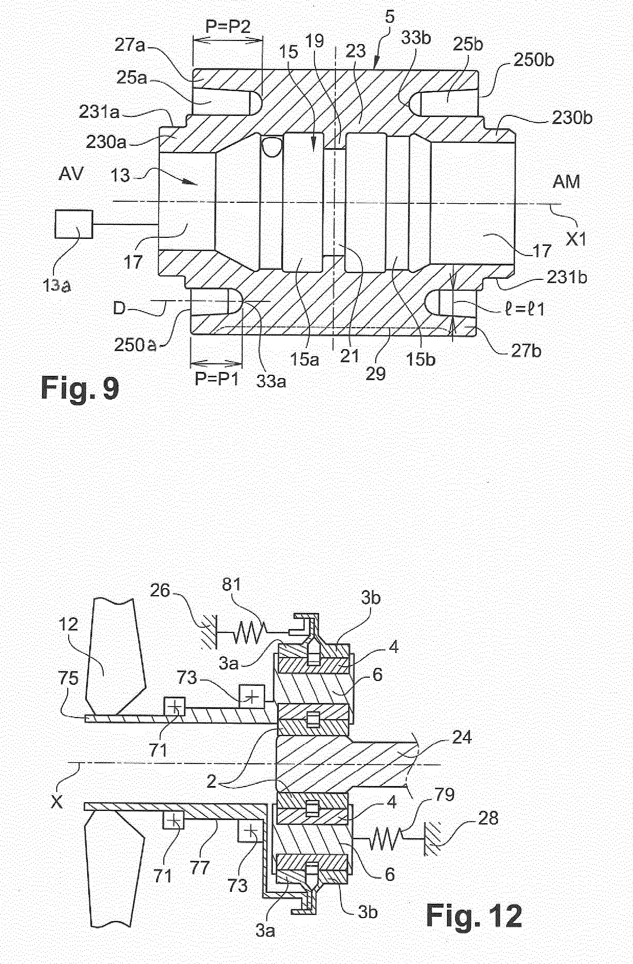

Il est donc nécessaire d'alimenter en huile l'interface 9 entre ces deux surfaces cylindriques 7, 8. Pour cela, comme illustré figure 6, le train épicycloïdal 1 comporte des moyens 13 d'amenée de lubrifiant relié à une source de lubrifiant 13a et comportant une chambre 15 (51 figure 5), appelée aussi passage axial, s'étendant sensiblement selon l'axe X1 du pivot 5 concerné. L'une au moins des extrémités 17 de la chambre 15 est raccordée à un canal d'entrée d'huile. Si une seule des extrémités 17 forme une arrivée d'huile, l'autre extrémité est bouchée. La chambre 15 peut être globalement cylindrique. Elle est en une ou plusieurs parties, telles que les deux parties 15a, 15b (voir figure 9) séparées par une cloison médiane 19 s'étendant radialement. Les extrémités latérales 17 de la chambre 15 comportent des passages axiaux de plus faible diamètre que la chambre 15, dont l'un au moins forme une entrée d'huile, comme indiqué précédemment. La cloison médiane 19 est traversée par un orifice 21 faisant communiquer les parties 15a, 15b de la chambre 15. Sur la figure 5, on voit un pivot conventionnel 50 qui, comme ceux 5 conformes à l'invention (voir figures 6-9), présente une surface (sensiblement) cylindrique externe (repérée 80 pour le pivot 50 et 8 pour le pivot 5) d'axe X1, adaptée à former un palier lisse avec la surface (sensiblement) cylindrique interne (7 figure 1) du pignon satellite 4 d'axe X1 concerné.

Chaque pivot resp.(respectivement) 5,50 présente une partie formant un fût radialement central, resp. 23,53, s'étendant autour du passage axial resp. 15,51. C'est autour de l'axe X1 que le pivot est adapté à tourner, dans le sens S imposé par son montage sur le réducteur. Chaque pivot présente en outre des rainures resp. 25a,25b,55a circonférentielles axialement opposées, ouvertes axialement (donc latéralement), procurant une souplesse au pivot (figure 5, on ne voit pas l'intérieur de l'autre extrémité du pivot, d'où le seul repère 55a mentionné). Ces rainures circonférentielles séparent radialement de deux parties latérales resp. 27a,27b,57a,57b en porte-à-faux deux parties extrêmes latérales resp. 230a,230b,55a (l'autre n'est pas visible figure 5), chacune à surface de portée périphérique 231a,231b et axialement opposées du fût central.

Pour son alimentation en liquide lubrifiant, la surface circonférentielle, radialement extérieure resp. 8,80 présente une fente resp. 29,59 d'alimentation allongée parallèlement à l'axe X1. Cette fente communique avec un conduit radial (31, figure 7), lequel communique avec le passage axial précité (15,51), On considérera que le lubrifiant liquide qui sort de la fente 29,59 coule sur la surface extérieure 8,80 dans le sens S des figures 5-7, quand le train épicycloïdal 1 fonctionne.

Sur le pivot 50 de l'art antérieur, il a été constaté un échauffement de sa surface active, donc de sa surface extérieure 80, en particulier circonférentiellement en amont de la rainure 59 ; zones 61a,61b figure 5.

Il s'avère que cette augmentation locale de la température est créée par l'air emprisonné dans la zone de souplesse (parties latérales 57a,57b en porte-à-faux). L'absence de matière limite la conduction de la chaleur et donc l'évacuation des calories. Pour rappel le creux de la zone de souplesse (rainures circonférentielles, telle que 55a) permet de diminuer la rigidité du pivot pour diminuer le désalignement entre la surface active du palier et ses portées. Or, le besoin de souplesse n'est pas nécessaire dans toutes les directions, il est donc possible de limiter l'étendue de la zone de souplesse dans les endroits à fort échauffement, afin d'augmenter la conduction et donc diminuer la température globalement sur la surface circonférentielle extérieure 8,80.

Ceci a amené les inventeurs à imaginer la méthodologie d'approche suivante à laquelle se rapporte d'ailleurs l'invention :
D'abord, ils ont déterminé par un modèle TEHD et sur un pivot tel que celui référencé 50, des champs de température tels que 63a,63b, ceci au moins à l'endroit de l'une au moins des parties latérales en porte-à-faux 57a,57b.

Ensuite, ils ont identifié à cet (ou à chaque) endroit, au moins une zone que le modèle TEHD a indiqué comme la(les) zone(s) de la ou des températures les plus élevées, comme en 630a,630b figure 5.

Puis ils sont intervenus sur le pivot 5 de l'invention pour qu'il soit fabriqué avec au moins une rainure circonférentielle 25a et/ou 25b modifiée par rapport à l'art antérieur notamment de la figure 5, comme en particulier dans les deux modes de réalisation plus particulièrement ici présentés en liaison avec les figures 6, d'une part, et 7,9 d'autre part.

Avant de détailler cette modification, on relèvera en outre que, figure 9, chaque rainure circonférentielle 25a,25b présente (ce qui pourrait aussi être constaté sur le pivot 50 de l'art antérieur ou celui de la figure 6) une extrémité latérale libre, resp. 250a,250b, située au niveau de l'extrémité libre correspondante de la partie latérale en porte-à-faux 27a ou 27b considérée.

Chaque rainure circonférentielle présente en outre :
- au moins une profondeur P, dans une direction (telle que D figure 9 pour la rainure 25a) suivant laquelle la rainure circonférentielle s'étend vers l'intérieur du pivot, depuis l'extrémité latérale libre (telle que donc 250a) jusqu'à une extrémité de fond, telle que 33a (voir aussi repère 33b pour la rainure 25b),
- et au moins une largeur l (que l'on peut considérer comme une section, ou un diamètre suivant la forme de la rainure).

La solution proposée est donc de faire varier ces largeurs et/ou profondeur de la zone de souplesse, selon l'endroit considéré sur la circonférence du pivot.

De façon approximative, la direction (telle que D) suivant laquelle s'étend une rainure circonférentielle est axiale (parallèle à l'axe X1). Plus finement, on notera une inclinaison radiale de quelques degrés vers l'intérieur.

Quoi qu'il en soit, la modification qui conduit à la solution de l'invention, comprend une fabrication du pivot 5 telle que l'une au moins des rainures circonférentielles 25a ou 25b présente une dite largeur et/ou une dite profondeur qui varie circonférentiellement, de telle sorte que, par exemple en deux endroits comme on l'a repéré figures 8,9 :
- P1 ≤ P ≤ P2, et/ou,
- l1 ≤ l ≤ l2,
les largeur et/ou profondeur des parties latérales en porte-à-faux 27a,27b variant en conséquence.

Il est en outre conseillé, comme illustré, de positionner angulairement, autour dudit axe X1, et en correspondance de la zone 630a et/ou 630b de la ou des températures les plus élevées, l'endroit où ladite largeur et/ou ladite profondeur est minimum.

Ainsi, si l'on considère que ce conseil a été appliqué dans le cas des figures 6-8, ces endroits sont situés angulairement de façon adjacente à la fente 29 d'alimentation en lubrifiant. Il est en outre conseillé que ce(s) endroit(s) de largeur et/ou profondeur minimum corresponde(nt) à la ou aux zones ou directions où l'on a pas besoin particulièrement de souplesse.

De fait, dans la solution illustrée figure 6, c'est le choix de largeur et profondeur réduite(s), pouvant être nulles (l = 0 ; P = 0) d'une partie d'au moins la rainure circonférentielle 25a qui est présentée.

Ainsi, sur un secteur angulaire A qui, considéré sur la longueur axiale du pivot, inclut la zone de la fente 29, le pivot 5 est, au moins à une extrémité latérale, dépourvu d'une partie de sa partie latérale en porte-à-faux, ici 27a, dès lors que dans cet exemple une partie de la rainure circonférentielle 25a n'existe donc plus. Elle est occupée par la matière pleine du pivot.

De préférence, pour allier facilité de fabrication, fiabilité et efficacité en termes de diminution des contraintes thermiques, il est conseillé que ladite largeur et/ou ladite profondeur (l,P) réduite(s), pouvant être nulle(s) s'étend(ent) sur un secteur angulaire A compris circonférentiellement entre 45° et 110°.

Une partie majoritaire de cette zone, voire toute celle-ci, repérée 35 figure 6, à dites largeur et profondeur (l,P) réduite(s), pouvant être nulles s'étendra angulairement de préférence de façon (immédiatement) adjacente à la fente 29, du côté opposé à celui vers lequel le lubrifiant coule (sens S) sur la surface extérieure 8 quand le train épicycloïdal est opérationnel (ses engrenages peuvent tourner), compte tenu des zones 63a,63b identifiées figure 5.

Dans une solution illustrée figures 7-9, c'est le choix d'(au moins)une profondeur d'(au moins) une partie d'au moins l'une des rainures circonférentielles, telle celle 25a, qui a été retenue (P1 ≤ P ≤ P2). Hormis au fond, en 33a, la largeur de rainure peut être constante (l = l1, par exemple).

Dans cette solution, la(chaque) rainure circonférentielle concernée, comme la(chaque) partie latérale en porte-à-faux, ici 27a, peut demeurer annulaire.

La solution des figures 7-9 peut être soit alternative à la précédente, soit complémentaire : faite alors à l'autre extrémité du pivot.

Pour les mêmes raisons techniques que ci-avant, il est conseillé que ladite profondeur minimum (P=P1 ; figure 8) soit présente sur un même secteur angulaire A :
- de préférence compris circonférentiellement entre 45° et 110°,
- et où une partie majoritaire de ce secteur, voire tout celui-ci, présentant la dite profondeur (P) minimum s'étend angulairement de préférence de façon (immédiatement) adjacente à la fente 29, du côté opposé à celui vers lequel le lubrifiant coule (sens S) sur la surface extérieure 8 quand le pivot est opérationnel, compte tenu des zones 63a,63b identifiées figure 5.

En effet, une telle présence de matière du pivot aux endroits sous contraintes thermiques doit favoriser la conduction de la chaleur et donc diminuer la température sur la surface circonférentielle extérieure 8, sans perturber le besoin de souplesse pour l'alignement, là où le besoin existe.

Afin de favoriser notamment encore les transferts thermiques et l'efficacité dans l'effet anti-désalignement, il est par ailleurs conseillé que le pivot précité soit monobloc, avec ses parties latérales en porte-à-faux 27a,27b et son fût central 23 en une seule pièce.

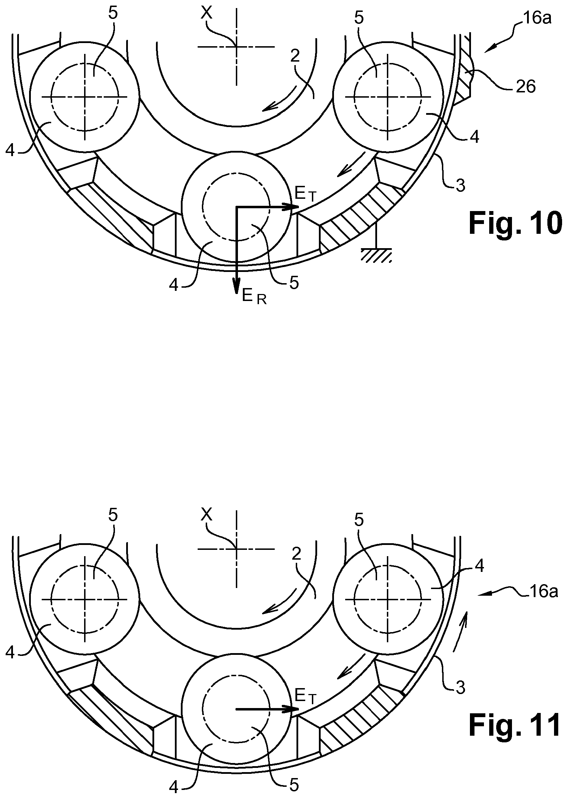

Sur les figures 10 et 12 (en haut), on a de nouveau schématisé le cas d'un montage de pivots 5 dans une configuration épicycloïdale, donc dans un cas où le pignon central 2 est mobile, mais la couronne extérieure 3 fixe, solidaire d'un carter extérieur, ou d'une virole annulaire, statique, 26 du compresseur 16, en particulier du compresseur basse pression 16a ; voir figure 12 en haut où une liaison à ressort 81 relie la virole annulaire 26 aux demi-couronnes 3a,3b. Comme illustré, des efforts tant tangentiaux E_{T} dus aux couples appliqués, que radiaux E_{R}, dus à la force centrifuge, sont exercés sur chaque pivot 5.

Sur la figure 11, un autre cas d'application est schématisé, celui d'un montage de pivots 5 dans une configuration planétaire, donc dans un cas où tant le pignon central 2 que la couronne extérieure 3 sont mobiles en rotation autour de l'axe X du compresseur 16a, en particulier du compresseur basse pression. Comme illustré, des efforts tangentiaux ET, dus aux couples appliqués, sont exercés sur chaque pivot 5. Cette situation peut être celle d'un open-rotor ou d'une double soufflante.

Sur la figure 12 sont comparées des solutions à trains d'engrenages épicycloïdaux dans lesquelles :
- en haut, on est dans une solution à porte-satellites mobile et à couronne fixe en rotation,
- en bas, le train d'engrenage est tel que le porte-satellites 6 est fixe (vis-à-vis d'un carter, ou d'une virole annulaire, statique, 28) et la couronne extérieure est mobile (solution dite aussi à train réducteur planétaire).

En liaison avec certaines figures précédentes, on y retrouve en commun un porte-satellites 6 porteur de satellites 4, un planétaire interne 2 et un planétaire externe, ici en deux demi-couronnes 3a,3b respectivement amont et aval vis-à-vis de l'axe de rotation X. Le planétaire interne 2 est en prise avec l'arbre axial 24, l'arbre du compresseur basse pression dans l'exemple. Des paliers 71,73 supportent et guident axialement la soufflante 12.

Dans la solution en haut, via un prolongement axial amont 55 supporté et guidé par les paliers 71,73, le porte-satellites 6 est en prise avec la soufflante 12 et un porte-couronne fixe est adjoint, lié ici à la demi-couronne 3a amont.

Dans la solution du bas, c'est le planétaire externe (demi couronnes 3a,3b) qui, via un prolongement axial amont 77 supporté et guidé par les paliers 71,73, est en prise avec la soufflante 12. Le porte-satellites 6 est fixe (liaison à ressort 79 avec la virole annulaire, statique, 28).

## Revendications

1. Pivot (5) pour palier lisse de train épicycloïdal, le pivot ayant un axe (X1), autour duquel il est adapté à tourner, et une circonférence, et présentant :
- une partie (23) formant un fût central, s'étendant autour d'un passage axial (15) du pivot (5), et
- des rainures circonférentielles (25a,25b) axialement opposées, ouvertes latéralement, qui séparent radialement, de deux parties latérales en porte-à-faux (27a,27b) du pivot, deux parties extrêmes latérales axialement opposées (230a,230b) du fût central (23), chaque rainure circonférentielle (25a,25b) présentant une extrémité latérale libre (250a,250b) et :
-- au moins une largeur (l), radialement,
-- ainsi qu'au moins une profondeur (P), dans une direction suivant laquelle la rainure circonférentielle (25a,25b) s'étend vers l'intérieur du pivot (5), depuis l'extrémité latérale libre (250a,250b) jusqu'à une extrémité de fond (33a),
**caractérisé en ce que**, sur l'une au moins des rainures circonférentielles (25a,25b):
- ladite au moins une largeur (l) et/ou ladite au moins une profondeur (P) est ou sont plus réduite(s) localement que sur le reste de la circonférence, ou,
- ladite au moins une dite largeur (l) est nulle sur une partie de la circonférence, et/ou ladite au moins une dite profondeur (P) varie circonférentiellement.

2. Pivot (5) selon la revendication 1, **caractérisé en ce qu'**il est monobloc, avec son fût central (23) et ses parties latérales en porte-à-faux (27a,27b) en une seule pièce.

3. Pivot (5) selon la revendication 1 ou 2, **caractérisé en ce que** ladite au moins une largeur (l) nulle, et/ou ladite au moins une profondeur (P) qui varie circonférentiellement, s'étend ou s'étendent sur un secteur angulaire (A) compris circonférentiellement entre 45° et 110°.

4. Pivot (5) selon l'une quelconque des revendications précédentes, **caractérisé en ce que** l'une au moins des rainures circonférentielles (25a,25b) est annulaire.

5. Train d'engrenages d'une turbomachine à gaz pour aéronef, le train d'engrenages comprenant une couronne extérieure (3) et des pignons satellites (4) en prise avec un pignon central (2) et avec la couronne extérieure (3) et montés chacun libre en rotation sur un porte-satellites (6), les pignons satellites (4) pouvant chacun tourner autour d'un axe (X1) de satellite par l'intermédiaire dudit pivot (5) selon l'une quelconque des revendications 1 à 4.

6. Train d'engrenages (1) selon la revendication 5, comportant en outre des moyens d'amenée d'huile au niveau d'une interface (9) entre un desdits pignons satellites (4) et ledit pivot (5), **caractérisé en ce que** ledit pivot (5) présente une surface circonférentielle radialement extérieure (8) qui présente au moins un passage (29) d'alimentation en un liquide lubrifiant, ladite au moins une largeur (l) et/ou au moins une profondeur (P) étant minimum dans une zone (61a,61b) latérale du pivot adjacente audit au moins un passage (29) et située angulairement du côté opposé à celui vers lequel le lubrifiant coule, sur la surface circonférentielle radialement extérieure (8) quand le train d'engrenages (1) tourne.

7. Turbomachine à gaz pour aéronef comprenant le train d'engrenages selon la revendication 5 ou 6 dont le pignon central (2) entoure et est solidaire en rotation d'un arbre (24) d'un compresseur (16,16a) de la turbomachine.

8. Turbomachine selon la revendication 7, dans laquelle la couronne extérieure (3) est solidaire d'un carter, ou d'une virole annulaire, statique (26) dudit compresseur qui est un compresseur basse pression (16a).

9. Turbomachine selon la revendication 7, dans laquelle le porte-satellites (6) est solidaire d'un carter, ou d'une virole annulaire, statique (28).

10. Procédé de réalisation d'un pivot (5), dit second pivot, pour palier lisse de train épicycloïdal selon la revendication 1, dans lequel procédé :
- sur un premier pivot référent (50) présentant deux parties latérales en porte-à-faux (57a,57b), on détermine, par un modèle thermo-élasto-hydro-dynamique, dit TEHD, des champs de température dudit premier pivot réfèrent (50), ceci au moins à l'endroit de l'une au moins des parties latérales en porte-à-faux (57a,57b) dudit premier pivot référent (50),
- on identifie à cet endroit au moins une zone que le modèle TEHD indique comme la zone de la ou des températures les plus élevées (61a,61b), et
- on réalise ledit second pivot (5), en positionnant angulairement, autour dudit axe (X1) du second pivot (5) et en correspondance de la zone de la ou des températures les plus élevées, l'endroit où ladite au moins une largeur (l) et/ou ladite au moins une profondeur (P) est ou sont minimum.

11. Procédé selon la revendication 10, dans lequel on utilise en tant que premier pivot référent (50), un pivot adapté à tourner autour dudit axe (X1), qui a une circonférence et qui présente :
- une partie (53) formant un fût central, s'étendant autour d'un passage axial (51) du premier pivot référent (50), et
- des rainures circonférentielles (55a) axialement opposées, ouvertes latéralement, qui séparent radialement, des deux parties latérales en porte-à-faux (57a,57b), deux parties extrêmes latérales axialement opposées (230a,230b) du fût central (53), chaque rainure circonférentielle (55a) présentant une extrémité latérale libre et :
-- au moins une largeur (l), radialement,
-- ainsi qu'au moins une profondeur (P), dans une direction suivant laquelle la rainure circonférentielle (55a) s'étend vers l'intérieur du premier pivot référent (50), depuis l'extrémité latérale libre jusqu'à une extrémité de fond.

## Patentansprüche

1. Drehzapfen (5) für Gleitlager von Planetengetrieben, wobei der Drehzapfen eine Achse (X1), um die er sich drehen kann, und einen Umfang aufweist, enthaltend:
- einen Abschnitt (23), der einen zentralen Schaft bildet und sich um einen axialen Durchlass (15) des Drehzapfens (5) herum erstreckt, und
- seitlich offene, axial gegenüberliegende Umfangsnuten (25a, 25b), die zwei axial gegenüberliegende seitliche Endabschnitte (230a, 230b) des zentralen Schafts (23) von zwei seitlichen freitragenden Abschnitten (27a, 27b) des Drehzapfens radial trennen, wobei jede Umfangsnut (25a, 25b) ein freies seitliches Ende (250a, 250b) aufweist sowie:
-- radial zumindest eine Breite (I),
-- und zumindest eine Tiefe (P) in einer Richtung, in der sich die Umfangsnut (25a, 25b) von dem freien seitlichen Ende (250a, 250b) zu einem Bodenende (33a) in den Drehzapfen (5) hinein erstreckt, **dadurch gekennzeichnet, dass** bei zumindest einer der Umfangsnuten (25a, 25b)
- die zumindest eine Breite (I) und/oder die zumindest eine Tiefe (P) abschnittsweise geringer ist bzw. sind als über den restlichen Umfang, oder
- die zumindest eine Breite (I) über einen Teil des Umfangs Null beträgt und/oder die zumindest eine Tiefe (P) in Umfangsrichtung variiert.

2. Drehzapfen (5) nach Anspruch 1, **dadurch gekennzeichnet, dass** er einstückig ausgeführt ist, wobei sein zentraler Schaft (23) und seine seitlichen freitragenden Abschnitte (27a, 27b) aus einem Stück bestehen.

3. Drehzapfen (5) nach Anspruch 1 oder 2, **dadurch gekennzeichnet, dass** die zumindest eine Nullbreite (I) und/oder die zumindest eine in Umfangsrichtung variierende Tiefe (P) sich über einen Winkelsektor (A) erstreckt bzw. erstrecken, der in Umfangsrichtung zwischen 45° und 110° beträgt.

4. Drehzapfen (5) nach einem der vorhergehenden Ansprüche, **dadurch gekennzeichnet, dass** zumindest eine der Umfangsnuten (25a, 25b) ringförmig ist.

5. Getriebezug einer Gasturbomaschine für Luftfahrzeuge, wobei der Getriebezug einen Außenkranz (3) und Planetenräder (4) enthält, die mit einem Sonnenrad (2) und mit dem Außenkranz (3) in Eingriff stehen und jeweils frei drehbar an einem Planetenradträger (6) gelagert sind, wobei die Planetenräder (4) jeweils um eine Planetenradachse (X1) mittels des Drehzapfens (5) nach einem der Ansprüche 1 bis 4 drehbar sind.

6. Getriebezug (1) nach Anspruch 5, ferner enthaltend Mittel zum Zuführen von Öl an eine Grenzfläche (9) zwischen einem der Planetenräder (4) und dem Drehzapfen (5), **dadurch gekennzeichnet, dass** der Drehzapfen (5) eine radial äußere Umfangsfläche (8) aufweist, die zumindest einen Durchlass (29) zur Versorgung mit einer Schmierflüssigkeit aufweist, wobei die zumindest eine Breite (I) und/oder die zumindest eine Tiefe (P) in einem seitlichen Bereich (61a, 61b) des Drehzapfens minimal ist, welcher Bereich an den zumindest einen Durchlass (29) angrenzt und winkelmäßig auf derjenigen Seite liegt, die der Seite entgegengesetzt ist, zu der das Schmiermittel auf der radial äußeren Umfangsfläche (8) hin fließt, wenn sich der Getriebezug (1) dreht.

7. Gasturbomaschine für Luftfahrzeuge mit dem Getriebezug nach Anspruch 5 oder 6, dessen Sonnenrad (2) eine Welle (24) eines Verdichters (16, 16a) der Turbomaschine umgibt und drehfest mit ihr verbunden ist.

8. Turbomaschine nach Anspruch 7, wobei der Außenkranz (3) fest mit einem Gehäuse oder einem statischen Mantelring (26) des Verdichters verbunden ist, bei dem es sich um einen Niederdruckverdichter (16a) handelt.

9. Turbomaschine nach Anspruch 7, wobei der Planetenradträger (6) fest mit einem Gehäuse oder einem statischen Mantelring (28) verbunden ist.

10. Verfahren zur Herstellung eines Drehzapfens (5), zweiter Drehzapfen genannt, für Gleitlager von Planetengetrieben nach Anspruch 1, wobei in dem Verfahren
- an einem ersten Bezugsdrehzapfen (50) mit zwei seitlichen freitragenden Abschnitten (57a, 57b) durch ein thermo-elasto-hydro-dynamisches Modell, TEHD genannt, Temperaturfelder des ersten Bezugsdrehzapfens (50) bestimmt werden, und zwar zumindest an der Stelle von zumindest einem der seitlichen freitragenden Abschnitte (57a, 57b) des ersten Bezugsdrehzapfens (50),
- an dieser Stelle zumindest ein Bereich identifiziert wird, den das TEHD-Modell als den Bereich der höchsten Temperatur(en) (61a, 61b) angibt, und
- der zweite Drehzapfen (5) hergestellt wird, indem um die Achse (X1) des zweiten Drehzapfens (5) und in Übereinstimmung mit dem Bereich der höchsten Temperatur(en) die Stelle winkelmäßig positioniert wird, an der die zumindest eine Breite (I) und/oder die zumindest eine Tiefe (P) minimal ist bzw. sind.

11. Verfahren nach Anspruch 10, wobei als erster Referenzdrehzapfen (50) ein Drehzapfen verwendet wird, der eine Achse (X1), um die er sich drehen kann, und einen Umfang hat und der aufweist:
- einen Abschnitt (53), der einen zentralen Schaft bildet und sich um einen axialen Durchlass (51) des ersten Bezugsdrehzapfens (50) herum erstreckt, und
- seitlich offene, axial gegenüberliegende Umfangsnuten (55a), die zwei axial gegenüberliegende seitliche Endabschnitte des zentralen Schafts (53) von den zwei seitlichen freitragenden Abschnitten (57a, 57b) radial trennen, wobei jede Umfangsnut (55a) ein freies seitliches Ende aufweist sowie:
-- radial zumindest eine Breite (I),
-- und zumindest eine Tiefe (P) in einer Richtung, in der sich die Umfangsnut (55a) von dem freien seitlichen Ende zu einem Bodenende in den ersten Bezugsdrehzapfen (50) hinein erstreckt.

## Claims

1. A pivot pin (5) for an epicyclic gear train sliding bearing, the pivot pin having an axis (X1), about which it can rotate, and a circumference, and further having:
- a portion (23) forming a central shank extending around an axial passage (15) of the pivot pin, and
- axially opposed circumferential grooves (25a,25b) which are open laterally and which radially separate two axially opposed lateral end portions (230a,230b) of the central shank from two lateral cantilevered portions (27a,27b) of the pivot pin, each circumferential groove (25a,25b) having a free lateral end (250a,250b) and:
-- radially at least one width (I),
-- as well as at least one depth (P), in a direction in which the circumferential groove extends inwardly in the pivot pin, from the free lateral end (250a,250b) to a bottom end (33a),
**characterized in that** at least one of the circumferential grooves (25a,25b) has:
- said at least one width (I) and/or said at least one depth (P) which is, or are, more reduced locally than on the rest of the circumference, or,
- said at least one width (I) which is equal to zero over part of the circumference, and/or said at least one depth (P) which varies circumferentially.

2. The pivot pin (5) according to claim 1, **characterized in that** it is in one piece, with the central shank (23) and the cantilevered lateral parts (27a,27b) being in one piece.

3. The pivot pin (5) according to claim 1 or 2, **characterized in that** said at least one width (I) equal to zero, and/or said at least one depth (P) which varies circumferentially, extend(s) over an angular sector (A) comprised circumferentially between 45° and 110°.

4. The pivot pin (5) according to any one of the preceding claims, **characterized in that** at least one of the circumferential grooves (25a,25b) is annular.

5. A gear train of an aircraft gas turbine engine, comprising an outer ring gear (3) and planet pinions (4) meshing with a central pinion (2) and with the outer ring gear (3) and each mounted for free rotation on a planet carrier (6), the planet pinions (4) being able to rotate about a planet axis (X1) via one said pivot pin (5) according to any one of claims 1 to 4.

6. The gear train (1) according to claim 5, further comprising means for supplying oil at an interface (9) between one of said planet pinions (4) and said pivot pin (5), **characterized in that** said pivot pin (5) has a radially outer circumferential surface (8) which has at least one passage (29) for supplying a lubricating liquid, said at least one width (I) and/or at least one depth (P) being minimum in a lateral area (61a,61b) of the pivot pin adjacent to said at least one passage (29) and located angularly on the side opposite that towards which the lubricant flows, on the radially outer circumferential surface (8) when the gear train (1) is rotating.

7. An aircraft gas turbine engine comprising the gear train according to claim 5 or 6, the central pinion (2) of which surrounds and is solidarized in rotation with a shaft (24) of a compressor (16a,16b) of the turbine engine.

8. The turbine engine according to claim 7, wherein the outer ring (3) is solidarized with a casing or a static annular shell (26) of said compressor which is a low-pressure compressor (16a).

9. The turbine engine according to claim 7, wherein the planet carrier (6) is solidarized with a casing or a static annular shell (28).

10. A method for making a pivot pin (5), called second pivot pin, for the epicyclic gear train sliding bearing according to claim 1, in which method:
- on a first reference pivot pin (50) having two lateral cantilevered parts (57a,57b) and by means of a thermo-elasto-hydrodynamic model, known as TEHD, temperature fields of said first reference pivot pin (50) are determined, at the location of at least one of the lateral cantilevered parts (57a,57b) of said first reference pivot pin (50),
- at least one zone is identified, at this location, that the TEHD model indicates as the highest temperature zone(s) (61a,61b), and
- said second pivot pin (5) is made by angularly positioning, around said axis (X1) of the second pivot pin (5) and in correspondence with the zone of the highest temperature(s), the place where said at least one width (I) and/or said at least one depth (P) is (are) minimum.

11. The method according to claim 10, in which as first reference pivot pin (50) is used a pivot pin adapted to rotate about said (X1), which has a circumference and which shows :
- a portion (23) forming a central shank extending around an axial passage (15) of the first reference pivot pin (50), and
- axially opposed circumferential grooves (55a) which are open laterally, and which radially separate two axially opposed lateral end portions (230a,230b) of the central shank from the two lateral cantilevered portions (57a,57b), each circumferential groove (55a) having a free lateral end and:
-- at least one width (I), radially,
-- as well as at least one depth (P), in a direction in which the circumferential groove (55a) extends inwardly in the first reference pivot pin (50), from the free lateral end to a bottom end.
